# EUROPÄISCHE PATENTANMELDUNG

(11) **EP 4 385 664 A1**
(43) Veröffentlichungstag der Anmeldung: **19.06.2024**
(21) Anmeldenummer: 22212691.4
(22) Anmeldetag: 12.12.2022
(51) Int. Cl.: B25B 23/14, B25B 27/10, B23D 29/00

(54) **ELEKTROHANDWERKZEUG UND VERFAHREN ZUM BETREIBEN EINES ELEKTROHANDWERKZEUGS**

(71) Anmelder: Hilti Aktiengesellschaft, 9494 Schaan (LI)
(72) Erfinder: Knyrim, Maximilian, 89584 Ehingen (DE)
(74) Vertreter: Hilti Aktiengesellschaft Corporate Intellectual Property

(57) **Zusammenfassung**

Die vorliegende Erfindung betrifft ein Elektrohandwerkzeug (100), insbesondere ein Press-, Crimp- und/oder Schneidewerkzeug, umfassend einen im Betrieb des Elektrohandwerkzeugs (100) beweglichen Werkzeugkopf (4), der über eine linear beweglich gelagerte Betätigungsstange (3) mit einer Antriebseinheit (10) gekoppelt oder zumindest zeitweise koppelbar ist. Die Antriebseinheit (10) weist zumindest einen Antriebsmotor (1) sowie ein Getriebe (2) auf, das einen rotatorischen Antrieb des Antriebsmotors (1) in eine Linearbewegung zum Antrieb der Betätigungsstange (3) wandelt. Die Antriebseinheit (10) weist eine mechanische Drehmomentbegrenzungsvorrichtung (5) auf, die dazu ausgebildet ist, einen Kraft-/Drehmomentfluss vom Antriebsmotor (1) zu der Betätigungsstange (3) bei einem vorbestimmten Grenzdrehmoment zu unterbrechen.

## Beschreibung

### GEBIET DER ERFINDUNG

Die vorliegende Erfindung betrifft ein Elektrohandwerkzeug, insbesondere ein Press-, Crimp- und/oder Schneidewerkzeug, sowie ein Verfahren zum Betreiben eines Elektrohandwerkzeugs.

Mechanische Press-, Crimp- und Schneideprozesse sind häufig auf Baustellen anzutreffende Arbeitsschritte. Wenn Armierungseisen abgetrennt, Rohre mechanisch miteinander verbunden (durch Crimpen, Bördeln oder Quetschen...) oder Schlauchschellen aufgepresst werden müssen, werden hierfür Press-, Crimp- und/oder Schneidewerkzeuge eingesetzt. Die einfachste Variante stellen rein manuell betriebene Geräte wie Bolzenschneider und dergleichen dar, welche aber in ihrer praktischen Anwendbarkeit aufgrund der großen aufzubringenden Betätigungskräfte und dem damit verbundenen Ermüdungspotential stark eingeschränkt sind.

Verbreitet sind daher elektrisch betriebene Handwerkzeuge, die die Durchführung der Press-, Crimp- und Schneideprozesse erheblich vereinfachen. Um hohe Betätigungskräfte, etwa für das Crimpen von Stahlrohren, zu realisieren, wird ein Presszylinder einer Gattung solcher Werkzeuge hydraulisch angetrieben. Hierbei treibt ein Antriebsmotor eine Hydraulikpumpe an, wobei eine Linearbewegung des Presszylinders unter Ausnutzung des von der Hydraulikpumpe erzeugten hydraulischen Drucks erreicht wird.

Eine andere ebenfalls bekannte Gattung sind elektro-mechanische Press-, Crimp- und/oder Schneidewerkzeuge, bei denen die Betätigungskräfte nicht hydraulisch, sondern über einen Spindeltrieb vom Antriebsmotor zum Press- bzw. Werkzeugkopf weitergeleitet werden. Hierbei wird eine Rotationsbewegung des Antriebsmotors über den Spindeltrieb in eine Linearbewegung umgewandelt. Häufig weisen diese elektro-mechanischen Geräte ein zwischen dem Spindeltrieb und dem Antriebsmotor angeordnetes Getriebe zur Drehzahl- und Drehmomentwandlung auf, um den Antriebsmotor entsprechend kleiner und leichter auslegen zu können.

Wenn der Press- bzw. Werkzeugkopf von Press-, Crimp- und/oder Schneidewerkzeugen in seiner Wirk-Endstellung angelangt ist - mit anderen Worten: Wenn seine Backen auf Block fahren - entstehen bei einem hydraulischen Press-, Crimp- und/oder Schneidewerkzeug hohe hydraulische Systemdrücke, welche mittels eines Überdruckventils abgelassen werden, um das System mechanisch nicht zu überlasten.

Bisher haben elektro-mechanisch angetriebene Press-, Crimp- und/oder Schneidewerkzeuge lediglich einen elektronischen Überlastungsschutz, der den Antriebsmotor beim Überschreiten einer vorbestimmten Grenzstromaufnahme abschaltet. Dies ist vergleichsweise träge und führt dazu, dass im Kraft-/Drehmomentfluss befindliche Vorrichtungsbestandteile des Elektrohandwerkzeugs zeitweise sehr hohen Kraft- und/oder Drehmomentspitzen ausgesetzt sind. Diese Vorrichtungsbestandteile müssen daher in der Praxis festigkeitsseitig tendenziell überdimensioniert werden, was das Gewicht des Elektrohandwerkzeugs erhöht und damit einen negativen Einfluss auf die Kosten sowie auf die Ergonomie hat.

Bei handgeführten Elektroschraubern sind dem Werkzeugkopf vorgelagerte einstellbare Rutschkupplungen bekannt, über die ein Maximaldrehmoment einstellbar ist. Solche Elektroschrauber sind jedoch mit dem erfindungsgemäßen Elektrohandwerkzeug nicht vergleichbar, da es sich hierbei um grundlegend verschiedene Werkzeuggattungen handelt; während ein Elektroschrauber einen rotatorisch angetriebenen Werkzeugkopf umfasst, wird der Werkzeugkopf des erfindungsgemäßen Elektrohandwerkzeugs linear angetrieben.

Eine Aufgabe der vorliegenden Erfindung ist es, eine verbessertes Elektrohandwerkzeug, insbesondere ein Press-, Crimp- und/oder Schneidewerkzeug, bereitzustellen, das sich durch einen optimierten Überlastungsschutz auszeichnet und somit robuster ist.

### OFFENBARUNG DER ERFINDUNG

Demgemäß wird ein Elektrohandwerkzeug, insbesondere ein Press-, Crimp- und/oder Schneidewerkzeug, vorgeschlagen, das einen im Betrieb des Elektrohandwerkzeugs beweglichen Werkzeugkopf umfasst, der über eine linear beweglich gelagerte Betätigungsstange mit einer Antriebseinheit gekoppelt oder zumindest zeitweise koppelbar ist. Die Antriebseinheit weist zumindest einen Antriebsmotor sowie ein Getriebe auf, das einen rotatorischen Antrieb des Antriebsmotors in eine Linearbewegung zum Antrieb der Betätigungsstange wandelt. Die Antriebseinheit weist ferner eine mechanische Drehmomentbegrenzungsvorrichtung auf, die dazu ausgebildet ist, einen Kraft-/Drehmomentfluss vom Antriebsmotor zu der Betätigungsstange bei einem vorbestimmten Grenzdrehmoment zu unterbrechen.

Bei der Drehmomentbegrenzungsvorrichtung handelt es sich vorteilhaft um eine rein mechanisch wirksame Drehmomentbegrenzungsvorrichtung. Dies hat den Vorteil, dass eine solche deutlich schneller reagiert als eine elektronisch realisierte Überlastsicherung des Antriebsmotors. Kraft- und/oder Drehmomentspitzen in der Antriebseinheit können daher deutlich wirksamer vermieden werden als bei bekannten gattungsgemäßen Elektrohandwerkzeugen mit nur einer elektronischen Überlastsicherung. Da die maximal im Betrieb zu erwartenden Kraft- und/oder Drehmomentniveaus hierdurch signifikant reduziert sind, kann der gesamte Antriebsstrang des erfindungsgemäßen Elektrohandwerkzeugs festigkeitsseitig schwächer ausgelegt werden, was einen positiven Effekt auf das Gewicht des Elektrohandwerkzeugs und somit indirekt auch auf dessen Kosten sowie auf eine verbesserte Ergonomie hat. Im Betrieb des erfindungsgemäßen Elektrohandwerkzeugs löst die mechanische Drehmomentbegrenzungsvorrichtung quasi ohne Zeitverzug aus sobald der Press- bzw. Werkzeugkopf in seiner Wirk-Endstellung angelangt ist bzw. seine Backen auf Block gefahren sind.

Das vorbestimmte Grenzdrehmoment kann im Dimensionierungsprozess des erfindungsgemäßen Elektrohandwerkzeugs individuell ausgelegt werden, sodass sichergestellt ist, dass der Antriebsstrang nicht überlastet wird. In beispielhaften Ausführungsformen kann das Grenzdrehmoment 10 bis 100 Nm betragen.

Die Anwendung der vorliegenden Erfindung ist ausdrücklich nicht auf Press-, Crimp- und/oder Schneidewerkzeuge beschränkt, vielmehr kann die Erfindung universell für alle Elektrohandwerkzeuge eingesetzt werden, bei denen eine Betätigungsstange zur Betätigung eines Werkzeugkopfs mit Hilfe eines Spindeltriebs axial verfahren werden muss, etwa auch für Kleberdispenser, Prägewekzeuge und Biegewerkezuge.

Der Antriebsmotor kann in Ausführungen eine Nenndrehzahl von 8.000 bis 20.000 U/min aufweisen.

Gemäß einer vorteilhaften Ausführungsform kann die Drehmomentbegrenzungsvorrichtung eine definierte Presspassung zwischen einer Nabe und einer Welle des Getriebes der Antriebseinheit aufweisen. Presspassungen können auf Basis der im Funktionskontakt auftretenden Reibwerte bzw. Oberflächenrauigkeiten sowie der Toleranzfeldlage zuverlässig ausgelegt werden, wobei ein breiter Grenzdrehmomentbereich realisierbar ist. Zudem ergibt sich der weitere Vorteil, dass eine Presspassung eine sehr kostengünstige Ausführungsform einer mechanischen Drehmomentbegrenzungsvorrichtung ist, da deren Teileanzahl auf das absolute Minimum reduziert ist. Ferner lässt sich eine als Presspassung ausgebildete Drehmomentbegrenzungsvorrichtung äußerst bauraumsparend integrieren. Die Presspassung ist erfindungsgemäß spezifisch zur Übertragung eines definierten Grenzdrehmoments ausgelegt. In beispielhaften Ausführungsformen kann die Presspassung eine Toleranzfeldlage H7/k6 bis H7/s6 oder H6/k5 bis H6/s6 aufweisen.

Als Werkstoffkombination in der Presspassung eignet sich insbesondere gehärteter Stahl auf gehärtetem Stahl oder gehärteter Stahl auf Buntmetall (z.B. Kupfer, Bronze oder Messing).

Alternativ kann die Drehmomentbegrenzungsvorrichtung auch eine Rutschkupplung umfassen, wobei die Rutschkupplung insbesondere zumindest ein Federelement aufweist, das eine auf einen Reibkontakt einwirkende definierte Anpresskraft erzeugt. Eine Rutschkupplung bietet den Vorteil, dass das Grenzdrehmoment sehr genau einstellbar ist und dass diese ferner bei Verschleiß gut wartbar ist, da in Ausführungen Reibbeläge des Reibkontakts separat ausgetauscht werden können. Rutschkupplungen sind am Markt in einer Vielzahl von Bauformen und Baugrößen sowie für einen breiten Grenzdrehmomentbereich verfügbar, sodass der Fachmann eine geeignete Variante auswählen kann. Die Rutschkupplung kann radial und/oder axial wirksam sein. In einer beispielhaften Ausführungsform ist die Rutschkupplung als so genannter Toleranzring ausgeführt. In Ausführungen kann die Rutschkupplung einstellbar sein, sodass ein Verwender des erfindungsgemäßen Elektrohandwerkzeugs basierend auf einer konkreten Press-, Crimp- und/oder Schneideaufgabe das gewünschte Grenzdrehmoment direkt am Gerät einstellen kann.

In einer weiteren Ausführungsform kann das Getriebe einen Spindeltrieb aufweisen, wobei der Spindeltrieb eingangsseitig mittelbar oder unmittelbar mit dem Antriebsmotor gekoppelt ist und ausgangsseitig mit der Betätigungsstange gekoppelt ist.

Der Spindeltrieb ist der Vorrichtungsbestandteil des Getriebes, welcher die Drehbewegung des Antriebsmotors in eine Linearbewegung wandelt während die Betätigungsstange der Vorrichtungsbestandteil des Elektrohandwerkzeugs ist, der die linearen Vor- und/oder Rückschubkräfte auf den Werkzeugkopf überträgt. Ein Spindeltrieb bietet den Vorteil, dass über diesen ein sehr großes Übersetzungsverhältnis realisierbar ist, sodass unter Einsatz von vergleichsweise kleinen Antriebsdrehmomenten sehr hohe Linearkräfte erzeugbar sind.

Gemäß einer noch weiteren Ausführungsform kann das Getriebe eine Drehzahlwandlungsvorrichtung aufweisen, die eingangsseitig mit einer Abtriebsseite des Antriebsmotors und ausgangsseitig mit dem Spindeltrieb gekoppelt ist. Die Drehzahlwandlungsvorrichtung kann insbesondere ein Planetengetriebe umfassen, das ein hohes Übersetzungsverhältnis, eine hohe Drehmomentbelastbarkeit sowie geringen Bauraumbedarf kombiniert. Der Einsatz einer mit der Abtriebsseite des Antriebsmotors gekoppelten und dem Spindeltrieb vorgelagerten Drehzahlwandlungsvorrichtung hat den Vorteil, dass der Antriebsmotor noch kleiner und damit leichter dimensioniert werden kann, was sowohl kostenseitig als auch ergonomisch einen positiven Effekt hat.

Ein Untersetzungsverhältnis der Drehzahlwandlungsvorrichtung kann in Ausführungen 8:1 bis 50:1 betragen. Eine geeignete Untersetzung kann der Fachmann basierend auf der Spindelsteigung, der gewünschten Ausfahrgeschwindigkeit, der Motorträgheit, der Gerätebaugröße und weiteren Faktoren dimensionieren.

In einer weiteren vorteilhaften Ausführungsform kann die Drehmomentbegrenzungsvorrichtung dem Spindeltrieb eingangsseitig vorgelagert und insbesondere der Drehzahlwandlungsvorrichtung nachgelagert sein. Diese Positionierung der Drehmomentbegrenzungsvorrichtung innerhalb der Antriebseinheit bzw. des Antriebsstrangs hat den besonderen Vorteil, dass an dieser Position vergleichsweise niedrige Drehzahlen bei einem vergleichsweise hohen Drehmomentniveau vorliegen. Dies hat einen wichtigen positiven Effekt auf das Verschleißverhalten der Drehmomentbegrenzungsvorrichtung, da beim Auslösen bzw. "Durchrutschen" derselben dadurch kleinere Relativbewegungen auftreten, sodass der tribologische Verschleiß minimiert ist. Insbesondere bei Ausführungen, bei denen die Drehmomentbegrenzungsvorrichtung als Presspassung ausgeführt ist, kann hierdurch ein nicht beabsichtigtes Reibverschweißen zwischen Welle und Nabe der Presspassung wirksam entgegengewirkt werden.

Gemäß einer weiteren Ausführungsform kann die Drehzahlwandlungsvorrichtung über ein Kopplungselement mit dem Spindeltrieb gekoppelt sein, wobei insbesondere die Drehmomentbegrenzungsvorrichtung in das Kopplungselement integriert oder mit diesem verbunden ist.

Diese Ausführung bietet den Vorteil, dass die Integration der Drehmomentbegrenzungsvorrichtung besonders bauraumsparend ist, da insbesondere ein bereits in gattungsgemäßen Elektrohandwerkzeugen vorhandener Vorrichtungsbestandteil mit konstruktiv einfachen Maßnahmen zu einer Drehmomentbegrenzungsvorrichtung weitergebildet werden kann.

Vorteilhaft kann vorgesehen sein, dass das Kopplungselement eingangsseitig mit der Drehzahlwandlungsvorrichtung und ausgangsseitig mit einem drehbaren Vorrichtungsbestandteil des Spindeltriebs, insbesondere einer Spindel des Spindeltriebs, gekoppelt ist.

Der Spindeltrieb kann alternativ oder zusätzlich zumindest eine Spindelmutter umfassen, in der die Spindel drehbar aufgenommen ist, wobei die Spindelmutter insbesondere bezüglich des Werkzeugkopfs relativ ortsfest angeordnet ist. Die Spindel kann in Ausführungen insbesondere über zumindest einen gelagerten Wälzkörper in der Spindelmutter aufgenommen sein. Bevorzugt handelt es sich bei dem Spindeltrieb um eine Wälzkörperumlaufspindel, insbesondere Kugelumlaufspindel.

In Ausführungen kann das Kopplungselement eine zumindest ein Axialrichtung wirksame Ausgleichskupplung umfassen, insbesondere eine drehsteife Ausgleichskupplung, insbesondere eine Keilwellenkupplung oder eine Klauenkupplung. Mit anderen Worten erlaubt es das Kopplungselement, einen Axialversatz, der durch die lineare Verlagerung der Spindel im Betrieb des Spindeltriebs auftritt, auszugleichen.

Gemäß einer Weiterbildung kann der Werkzeugkopf zumindest zwei jeweils um einen Drehpunkt schwenkbare Backen aufweisen, die wahlweise öffen- und schließbar sind. Die Backen weisen jeweils an zueinander weisenden Seiten zumindest eine Wirkfläche auf, bei der es sich insbesondere um eine Schneidfläche, eine Pressmatrize und/oder Crimpmatrize handeln kann. Die Backen sind zumindest zeitweise kinematisch mit der Betätigungsstange koppelbar bzw. gekoppelt, sodass der jeweilige Öffnungs- bzw. Schließgrad der Backen von der Linearposition der Betätigungsstange abhängt. Die Kinematik der Backen kann insbesondere so ausgeführt sein, dass diese bei einer Vorschubbewegung der Betätigungsstange geschlossen werden bzw. in ihre Wirk-Endstellung überführbar sind, während die Backen bei einer Rückzugsbewegung der Betätigungsstange geöffnet werden können.

Ferner kann vorgesehen sein, dass es sich bei dem Antriebsmotor um einen elektrischen Antriebsmotor handelt, der insbesondere eine Überlastsicherung aufweist. Bei der Überlastsicherung kann es sich insbesondere um eine elektronische oder elektrische Überlastsicherung handeln. Insbesondere weist die mechanische Drehmomentbegrenzungsvorrichtung hierbei ein schnelleres Auslöseverhalten auf als die Überlastsicherung des Antriebsmotors. Bei der Überlastsicherung des Antriebsmotors kann es sich beispielsweise um eine Schutzschaltung handeln, die den Stromfluss zum Antriebsmotor bei Überschreiten einer vorbestimmten Grenzstromaufnahme unterbricht.

Schließlich kann das Elektrohandwerkzeug ein Gehäuse aufweisen, in oder an dem der Werkzeugkopf, die Betätigungsstange sowie die Antriebseinheit angeordnet sind. Das Gehäuse kann insbesondere ein Kunststoffmaterial aufweisen oder daraus bestehen. In Ausführungen kann das Gehäuse ein Innenteil aus einem mechanisch belastbaren Material, insbesondere einem Metall, aufweisen, das als Maschinenträger fungiert und die im Betrieb am Kraftfluss beteiligten Vorrichtungsbestandteile aufnimmt. Das Gehäuse, insbesondere dessen Innenteil, stellt entsprechende Aufnahmebereiche für den Werkzeugkopf, die Betätigungsstange sowie die Antriebseinheit bereit und ist dazu ausgelegt, im Betrieb auftretende Lagerungskräfte entsprechend aufzunehmen.

Ein weiterer Aspekt der Erfindung betrifft ein Verfahren zum Betreiben eines Elektrohandwerkzeugs, wobei das Elektrohandwerkzeug einen im Betrieb des Elektrohandwerkzeugs beweglichen Werkzeugkopf aufweist, der über eine linear beweglich gelagerte Betätigungsstange mit einer Antriebseinheit gekoppelt oder zumindest zeitweise koppelbar ist. Die Antriebseinheit weist zumindest einen Antriebsmotor sowie ein Getriebe auf, das einen rotatorischen Antrieb des Antriebsmotors in eine Linearbewegung zum Antrieb der Betätigungsstange wandelt. Ferner weist die Antriebseinheit eine mechanische Drehmomentbegrenzungsvorrichtung auf, die dazu ausgebildet ist, einen Kraft-/Drehmomentfluss vom Antriebsmotor zu der Betätigungsstange bei einem vorbestimmten Grenzdrehmoment zu unterbrechen.

Bei Durchführung des Verfahrens wird
- der Antriebsmotor zur Bewirkung einer Bewegung des Werkzeugkopfs in einer Wirkrichtung betrieben, und
- der Werkzeugkopf dadurch in eine Wirk-Endstellung überführt, und
- bei Überschreiten des vorbestimmten Grenzdrehmoments in der Antriebseinheit die Drehmomentbegrenzungsvorrichtung ausgelöst, um den Kraft-/Drehmomentfluss vom Antriebsmotor zu der Betätigungsstange zu unterbrechen.

Gemäß einer Weiterbildung des Verfahrens wird in einem nachfolgenden Verfahrensschritt eine elektronische Überlastsicherung des Antriebsmotors ausgelöst.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine Längsschnittansicht eines erfindungsgemäßen Elektrohandwerkzeugs;
- Fig. 2: Detail A gemäß Fig. 1;
- Fig. 3: eine isometrische Ansicht eines mit einer Spindel gekoppelten Kopplungselements eines erfindungsgemäßen Elektrohandwerkzeugs mit der Drehmomentbegrenzungsvorrichtung im Antriebszustand;
- Fig. 4: eine isometrische Ansicht eines mit einer Spindel gekoppelten Kopplungselements eines erfindungsgemäßen Elektrohandwerkzeugs mit der Drehmomentbegrenzungsvorrichtung im Auslösezustand.

Gleiche oder funktionsgleiche Elemente werden durch gleiche Bezugszeichen in den Figuren indiziert, soweit nichts anderes angegeben ist.

### AUSFÜHRUNGSFORMEN DER ERFINDUNG

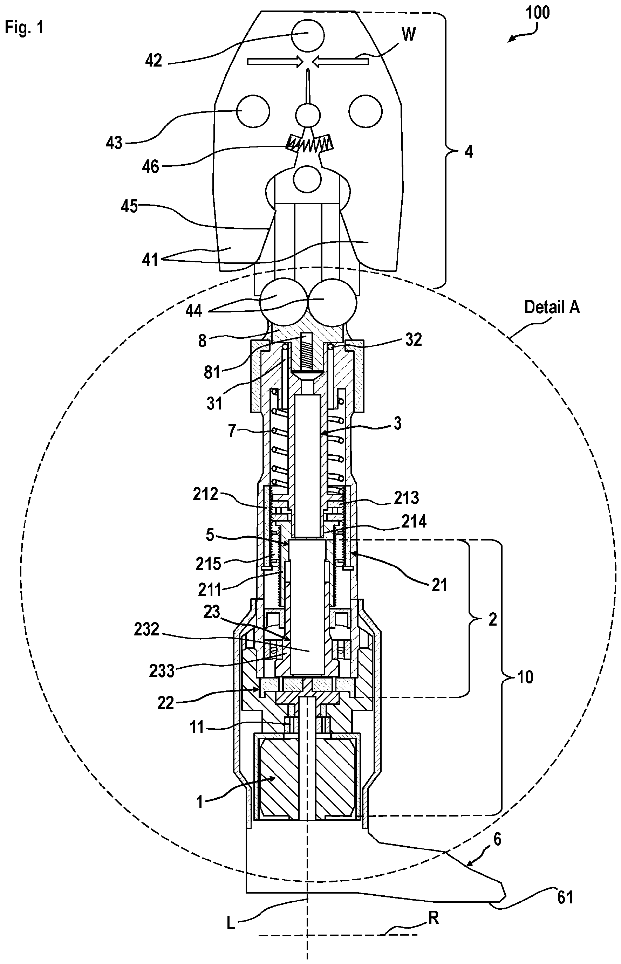

**Fig.** 1 zeigt eine Längsschnittansicht des erfindungsgemäßen Elektrohandwerkzeugs 100 in Form eines Press-, Crimp- und/oder Schneidewerkzeugs. Das Elektrohandwerkzeug 100 weist einen beweglichen Werkzeugkopf 4 mit zwei um jeweils einen Drehpunkt 43 schwenkbar gelagerten Backen 41 auf. Die Backen 41 sind in der Abbildung geschlossen dargestellt, können aber entgegen der Wirkrichtung W geöffnet werden, um ein zu bearbeitendes Werkstück einzulegen, da diese in dem gezeigten Zustand nur lose durch eine Andruckfeder 46 im Schließzustand gehalten werden.

Die Backen 41 weisen jeweils an zueinander weisenden Seiten eine Wirkfläche 42, insbesondere in Form einer Schneidkante, Press- und/oder Crimpmatrize, auf. Zwischen die beiden Wirkflächen 42 kann das zu bearbeitende Werkstück, etwa ein zu crimpendes Rohrsegment, eingelegt werden nachdem die Backen 41 unter Überwindung der Vorspannkraft der Andruckfeder 46 geöffnet wurden.

Das Elektrohandwerkzeug 100 weist ferner eine Antriebseinheit 10 auf, die eine linear in Axialrichtung L verlagerbare Betätigungsstange 3 antreibt, die kinematisch mit den Backen 41 des Werkzeugkopfs 4 koppelbar ist. Bei einer Vorschubbewegung der Betätigungsstange 3 in Längsrichtung L können die Backen 41 in Wirkrichtung W bzw. in Schließrichtung belastet werden während sich die Backen 41 bei einer Rückzugsbewegung der Betätigungsstange 3 wieder öffnen lassen. Die Kopplung der Betätigungsstange 3 mit dem Werkzeugkopf 4 wird über ein Verbindungselement 8 realisiert, welches mit einem distalen Ende der Betätigungsstange 3 durch eine Schraubverbindung 81 verbunden ist. Am Verbindungselement 8 sind zwei Rollen 44 angeordnet, die an diesem drehbar gelagert sind. Bei einer Vorschubbewegung der Betätigungsstange 3 kommen die Rollen 44 an den Backen 41 jeweils zugeordneten Führungskulissen 45 zur Anlage, wodurch eine Schließkraft auf die Backen 41 ausgeübt wird.

Die Betätigungsstange 3 ist an ihrem distalen Ende über ein Radiallager 31 gegenüber dem Gehäuse 6 bzw. einem mechanisch belastbaren Innenteil des Gehäuses gelagert und über eine Dichtung 32 abgedichtet. An ihrem proximalen Ende ist die Betätigungsstange 3 über ein Radiallager 214 sowie ein Axiallager 213 gegenüber dem Spindeltrieb 21, insbesondere gegenüber einer Spindel 211 des Spindeltriebs 21, gelagert.

Der Spindeltrieb 21 ist Teil eines Getriebes 2 der Antriebseinheit 10, die ferner einen Antriebsmotor 1, insbesondere einen Elektromotor, aufweist. Der Antriebsmotor 1 wirkt rotatorisch, wobei dessen Abtriebswelle in einer Lagerung 11 aufgenommen ist, die diese gegenüber dem Gehäuse 6 drehbar lagert. Die Abtriebswelle des Antriebsmotors 1 ist mit einer Drehmomentwandlungsvorrichtung 22 verbunden, welche in Form eines Planetengetriebes bereitgestellt ist. Eine Abtriebsseite der Drehmomentwandlungsvorrichtung 22 ist mit einem Kopplungselement 23 gekoppelt, welches ein Außenteil 233 und ein Innenteil 232 aufweist, die drehfest aber axial verschiebbar miteinander verbunden sind. Die Drehmomentwandlungsvorrichtung 22 ist mit dem Außenteil 233 des Kopplungselements 23 gekoppelt. Anderenends ist das Kopplungselement 23 mit dem Spindeltrieb 21 gekoppelt, nämlich über das Innenteil 232. Das Kopplungselement 23 stellt eine in Axialrichtung wirksame Ausgleichskupplung dar, die es ermöglicht, das Innenteil 232 relativ gegenüber dem mit der Drehzahlwandlungsvorrichtung 22 gekoppelten Außenteil 233 in Längsrichtung L zu verschieben.

Das Innenteil 232 des Kopplungselements 23 ist mit einer Spindel 211 des Spindeltriebs 21 gekoppelt, sodass eine Drehbewegung bzw. ein Antriebsmoment in die Spindel 211 einleitbar ist. Die Spindel 211 ist drehbar in einer Spindelmutter 212 geführt, die gegenüber dem Werkzeugkopf 4 ortsfest am Gehäuse 6 angeordnet ist. Genauer ist die Spindel 212 über eine Vielzahl gelagerter Wälzkörper 215 in der Spindelmutter 212 aufgenommen. Die Wälzkörper 215 sind insbesondere in einem Wälzkörperkäfig aufgenommen. Mit anderen Worten handelt es sich bei dem Spindeltrieb 21 um eine Wälzkörperumlaufspindel.

Der Spindeltrieb 21 ist dazu eingerichtet, eine Drehbewegung des Kopplungselements 23 in eine Linearbewegung umzuwandeln und diese auf die Betätigungsstange 3 zu übertragen. Da die Spindel 211 drehbar ist, ist die Betätigungsstange 3 durch die weiter oben beschrieben Radial- 214 und Axiallager 213 von dieser entkoppelt, sodass zwar die Vorschubbewegung auf die Betätigungsstange 3 übertragen wird, nicht aber die Drehbewegung.

Die Kopplung des Kopplungselements 23 mit der Spindel 211 des Spindeltriebs 21 erfolgt über eine mechanische Drehmomentbegrenzungsvorrichtung 5. Die mechanische Drehmomentbegrenzungsvorrichtung 5 ist als Presspassung zwischen dem Innenteil 232 der Kopplungsvorrichtung 23 und der Spindel 211 des Spindeltriebs 21 ausgeführt. Die Presspassung der Drehmomentbegrenzungsvorrichtung 5 ist hinsichtlich ihres maximal übertragbaren Grenzdrehmoments derart ausgelegt, dass diese auslöst bzw. durchrutscht sobald die Backen 41 des Werkzeugkopfs 4 auf Block gefahren sind. Hierdurch wird eine effektive Kraft- und Drehmomentbegrenzung in der gesamten Antriebseinheit 10 bzw. im Antriebsstrang des Elektrohandwerkzeugs 100 erreicht, sodass mechanischen Schäden durch Überlastung zuverlässig vermieden werden können. Die Anordnung der Drehmomentbegrenzungsvorrichtung 5 der Drehzahlwandlungsvorrichtung 22 nachgelagert hat den Vorteil, dass an dieser Position ein vergleichsweise geringes Drehzahlniveau bei einem vergleichsweise hohem Drehmomentniveau vorliegt. Dies sind ideale Bedingungen zum Einsatz einer Drehmomentbegrenzungsvorrichtung 5, da beim Auslösen bzw. Durchrutschen derselben nur geringe Relativbewegungen auftreten, sodass tribologischem Verschleiß und/oder unbeabsichtigtem Reibverschweißen der Reibpartner der Presspassung wirksam entgegen gewirkt wird.

Da die Kopplung des Spindeltriebs 21 mit der Betätigungsstange 3 nur in Vorschubrichtung bzw. unter Druckbelastung wirksam ist (das Axiallager 213 überträgt keine Zugkräfte), ist ferner eine Rückstellfeder 7 vorgesehen, die die Betätigungsstange 3 entgegen der Vorschubrichtung zurück schiebt wenn der Spindeltrieb 21 zurück gefahren wird. Die Rückstellfeder 7 stützt sich einenends am Gehäuse 6 ab und anderenends an einem in Radialrichtung R auskragenden Bund der Betätigungsstange 3. Mit ebendiesem in Radialrichtung R auskragenden Bund liegt die Betätigungsstange 3 auch am Axiallager 213 an, sodass die Kräfte beim Vorschub der Spindel 211 des Spindeltriebs 21 über diesen Bund in die Betätigungsstange 3 eingeleitet werden.

Das Gehäuse 6 verfügt ferner über eine Akkuaufnahme 61, an der auswechselbar ein Akku zur Stromversorgung des Antriebsmotors 1 angeordnet werden kann.

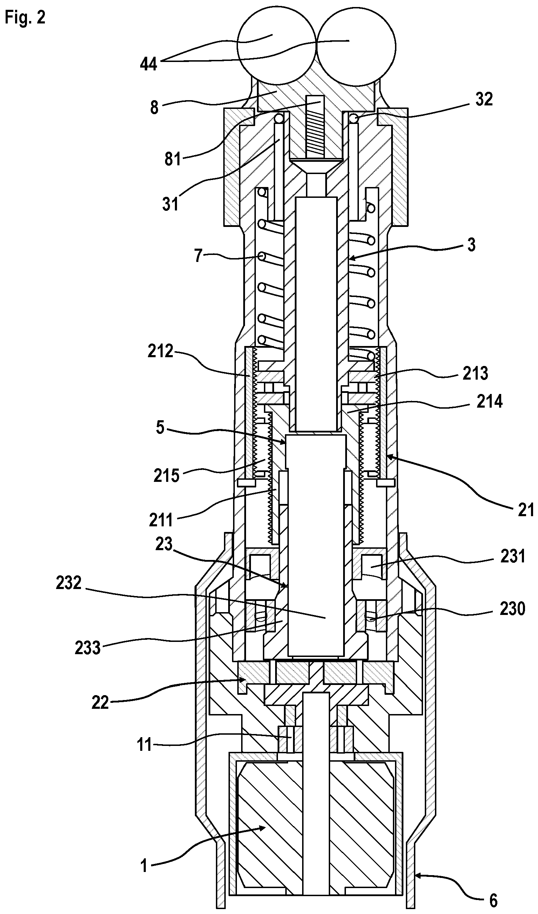

Fig. 2 zeigt Detail A aus Fig. 1. Hierbei ist der funktionelle Kernbereich des erfindungsgemäßen Elektrohandwerkzeugs 100 genauer dargestellt, wobei insbesondere der Bereich der Kopplung des Kopplungselements 23 mit dem Spindeltrieb 21 über die Drehmomentbegrenzungsvorrichtung 5 genauer zu erkennen ist. Ferner ist die Lagerung 230,231 des Kopplungselements 23 im Gehäuse 6 dargestellt, die über ein Kugellager 230 und ein Rollenlager 231 realisiert ist, die in Längsrichtung L beabstandet sind,

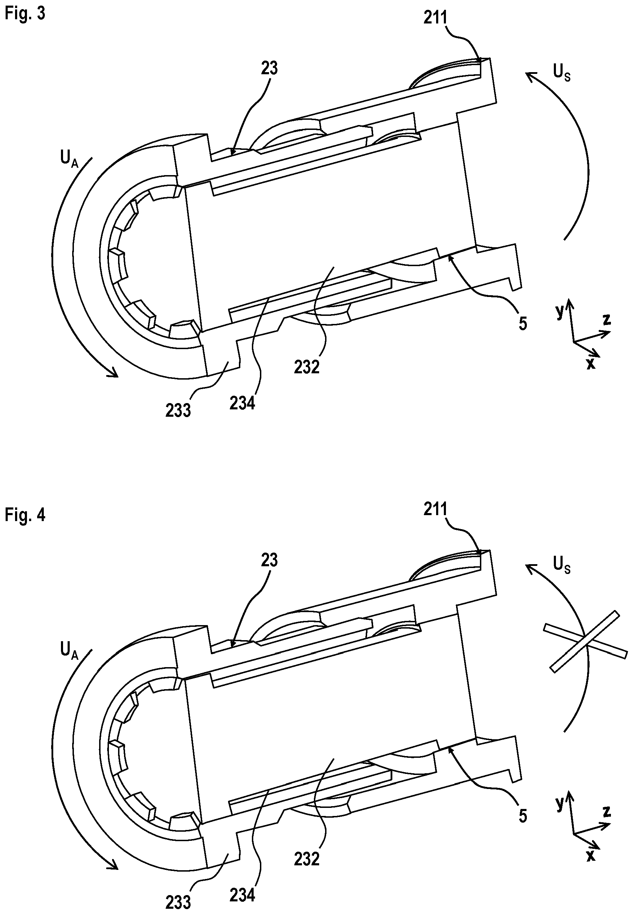

In den **Fig.** 3 und **Fig.** 4 ist jeweils eine isometrische Ansicht des Kopplungselements 23 sowie der Spindel 211 des Spindeltriebs 21 gezeigt. Wie hierin bereits dargelegt, ist das Außenteil 233 des Kopplungselements 23 im Zusammenbau mit einer Abtriebsseite der Drehmomentwandlungsvorrichtung 22 verbunden, während das Innenteil 232 über die Drehmomentbegrenzungsvorrichtung 5 mit der Spindel 211 des Spindeltriebs 21 gekoppelt ist. Genauer ist die Drehmomentbegrenzungsvorrichtung 5 als Presspassung zwischen einer Außenmantelfläche des Innenteils 232 der Kopplungsvorrichtung 23 ("Wellenseite") und einer Innenmantelfläche der Spindel 211 des Spindeltriebs 21 ("Nabenseite") ausgebildet.

Die Kopplungsvorrichtung 23 umfasst eine axial wirksame Ausgleichskupplung, die das Außenteil 233 drehfest mit dem Innenteil 232 koppelt, jedoch eine relative Axialbewegung des Innenteils 232 gegenüber dem Außenteil 233 gestattet, wenn die Spindel 211 axial verlagert wird. Die axiale Ausgleichswirkung ist über eine Keilwellenkupplung 234 realisiert, die zwischen einer Innenmantelfläche des Außenteils 233 und einer Außenmantelfläche 232 des Innenteils 232 ausgebildet ist. An seinem proximalen Ende (in der Abbildung links) weist das Außenteil 233 einen radial eingezogenen Bund auf, der als Axialanschlag für das Innenteil 232 fungiert.

Fig. 3 stellt einen Antriebszustand dar, in dem eine antriebsseitige Rotation U_{A} des Kopplungselements 23 einer abtriebsseitigen Rotation Us der Spindel 211 entspricht. In Fig. 4 ist hingegen die abtriebsseitige Rotation Us blockiert, nämlich dadurch, dass die Backen 41 des Werkzeugkopfs 4 in ihrer Wirk-Endstellung angelangt bzw. auf Block gefahren sind. In diesem Zustand ist das maximal von der Drehmomentbegrenzungsvorrichtung 5 übertragbare Grenzdrehmoment überschritten, sodass diese auslöst bzw. durchrutscht. Das maximal in der Antriebseinheit 10 bzw. im Antriebsstrang des Elektrohandwerkzeugs auftretende Drehmoment- bzw. Kraftniveau ist hierdurch auf das Grenzdrehmoment begrenzt, sodass in im Betrieb in einem Zeitfenster zwischen dem auf Block fahren der Backen 41 und dem Auslösen einer Überlastsicherung des Antriebsmotors 1 keine übermäßigen Kraft- und Drehmomentspitzen entstehen können.

Neben der hierin bereits aufgezeigten Möglichkeit, die Komponenten der Antriebseinheit dadurch festigkeitsseitig schwächer auslegen zu können und damit Gewicht und Kosten einzusparen, ergibt sich dadurch der weitere Vorteil, dass das Elektrohandwerkzeug 100 robuster wird und weniger zu Schäden durch mechanische Überlastung neigt.

### BEZUGSZEICHENLISTE

- 100: Elektrohandwerkzeug
- 10: Antriebseinheit
- 1: Antriebsmotor
- 11: Lagerung Abtrieb Motor
- 2: Getriebe
- 21: Spindeltrieb
- 211: Spindel
- 212: Spindelmutter
- 213: Axiallager Betätigungsstange
- 214: Radiallager Betätigungsstange
- 215: Wälzkörper
- 22: Drehzahlwandlungsvorrichtung
- 23: Kopplungselement
- 230: Lagerung Kopplungselement
- 231: Lagerung Kopplungselement
- 232: Innenteil Kopplungselement
- 233: Außenteil Kopplungselement
- 234: Keilwellenkupplung
- 3: Betätigungsstange
- 31: Radiallager Betätigungsstange
- 32: Dichtung Betätigungsstange
- 4: Werkzeugkopf
- 41: Backen
- 42: Wirkfläche / Pressmatrize
- 43: Drehpunkt
- 44: Rollen
- 45: Führungskulisse
- 46: Andruckfeder
- 5: Drehmomentbegrenzungsvorrichtung
- 6: Gehäuse
- 61: Akkuaufnahme
- 7: Rückstellfeder
- 8: Verbindungselement Betätigungsstange-Werkzeugkopf
- 81: Schraubverbindung
- L: Axialrichtung
- R: Radialrichtung
- U_{A}: Rotation Antrieb Kopplungselement
- Us: Rotation Abtrieb Kopplungselement
- W: Wirkrichtung

## Patentansprüche

1. Elektrohandwerkzeug (100), insbesondere Press-, Crimp- und/oder Schneidewerkzeug, umfassend einen im Betrieb des Elektrohandwerkzeugs (100) beweglichen Werkzeugkopf (4), der über eine linear beweglich gelagerte Betätigungsstange (3) mit einer Antriebseinheit (10) gekoppelt oder zumindest zeitweise koppelbar ist, wobei die Antriebseinheit (10) zumindest einen Antriebsmotor (1) sowie ein Getriebe (2) aufweist, das einen rotatorischen Antrieb des Antriebsmotors (1) in eine Linearbewegung zum Antrieb der Betätigungsstange (3) wandelt, **dadurch gekennzeichnet, dass** die Antriebseinheit (10) eine mechanische Drehmomentbegrenzungsvorrichtung (5) aufweist, die dazu ausgebildet ist, einen Kraft-/Drehmomentfluss vom Antriebsmotor (1) zu der Betätigungsstange (3) bei einem vorbestimmten Grenzdrehmoment zu unterbrechen.

2. Elektrohandwerkzeug (100) nach Anspruch 1, wobei die Drehmomentbegrenzungsvorrichtung (5) eine definierte Presspassung zwischen einer Nabe und einer Welle des Getriebes (2) der Antriebseinheit (10) aufweist.

3. Elektrohandwerkzeug (100) nach Anspruch 1, wobei die Drehmomentbegrenzungsvorrichtung (5) eine Rutschkupplung umfasst, wobei die Rutschkupplung insbesondere zumindest ein Federelement aufweist, das eine auf einen Reibkontakt einwirkende definierte Anpresskraft erzeugt.

4. Elektrohandwerkzeug (100) nach einem der Ansprüche 1 bis 3, wobei das Getriebe (2) einen Spindeltrieb (21) aufweist, und wobei der Spindeltrieb (21) eingangsseitig mittelbar oder unmittelbar mit dem Antriebsmotor (1) gekoppelt ist und ausgangsseitig mit der Betätigungsstange (3) gekoppelt ist.

5. Elektrohandwerkzeug (100) nach Anspruch 4, wobei das Getriebe (2) eine Drehzahlwandlungsvorrichtung (22) aufweist, die eingangsseitig mit dem Antriebsmotor (1) und ausgangsseitig mit dem Spindeltrieb (21) gekoppelt ist, wobei insbesondere die Drehzahlwandlungsvorrichtung (22) ein Planetengetriebe umfasst.

6. Elektrohandwerkzeug (100) nach Anspruch 4 oder 5, wobei die Drehmomentbegrenzungsvorrichtung (5) dem Spindeltrieb (21) eingangsseitig vorgelagert ist, und insbesondere der Drehzahlwandlungsvorrichtung (22) nachgelagert ist.

7. Elektrohandwerkzeug (100) nach Anspruch 5 oder 6, wobei die Drehzahlwandlungsvorrichtung (22) über ein Kopplungselement (23) mit dem Spindeltrieb gekoppelt ist, wobei insbesondere die Drehmomentbegrenzungsvorrichtung (5) mit dem Kopplungselement (23) verbunden oder in das Kopplungselement (23) integriert ist.

8. Elektrohandwerkzeug (100) nach Anspruch 7, wobei das Kopplungselement (23) eingangsseitig mit der Drehzahlwandlungsvorrichtung (22) und ausgangsseitig mit einem drehbaren Vorrichtungsbestandteil des Spindeltriebs (21), insbesondere einer Spindel (211) des Spindeltriebs (21), gekoppelt ist.

9. Elektrohandwerkzeug (100) nach einem der Ansprüche 4 bis 8, wobei der Spindeltrieb (21) zumindest eine Spindelmutter (212) umfasst, in der die Spindel (211) drehbar aufgenommen ist, wobei insbesondere die Spindelmutter (212) bezüglich des Werkzeugkopfs (4) relativ ortsfest angeordnet ist.

10. Elektrohandwerkzeug (100) nach einem der Ansprüche 7 bis 9, wobei das Kopplungselement (23) eine zumindest ein Axialrichtung wirksame Ausgleichskupplung umfasst, insbesondere eine drehsteife Ausgleichskupplung, insbesondere eine Keilwellenkupplung (234) oder eine Klauenkupplung.

11. Elektrohandwerkzeug (100) nach einem der vorigen Ansprüche, wobei der Werkzeugkopf (4) zumindest zwei jeweils um einen Drehpunkt (43) schwenkbare Backen (41) aufweist, die wahlweise öffen- und schließbar sind, wobei die Backen (41) jeweils an zueinander weisenden Seiten zumindest eine Wirkfläche (42) aufweisen, insbesondere eine Schneidfläche, eine Pressmatrize (42) und/oder Crimpmatrize.

12. Elektrohandwerkzeug (100) nach einem der vorigen Ansprüche, wobei der Antriebsmotor (1) ein elektrischer Antriebsmotor ist, der insbesondere eine elektronische Überlastsicherung aufweist, wobei die Drehmomentbegrenzungsvorrichtung (5) insbesondere ein schnelleres Auslöseverhalten aufweist als die Überlastsicherung des Antriebsmotors (1).

13. Elektrohandwerkzeug (100) nach einem der vorigen Ansprüche, wobei das Elektrohandwerkzeug (100) ein Gehäuse (6) aufweist, in oder an dem der Werkzeugkopf (4), die Betätigungsstange (3) sowie die Antriebseinheit (10) angeordnet sind.

14. Verfahren zum Betreiben eines Elektrohandwerkzeugs (100), insbesondere eines Press-, Crimp- und/oder Schneidewerkzeugs, insbesondere nach einem der vorigen Ansprüche, wobei das Elektrohandwerkzeug (100) einen im Betrieb des Elektrohandwerkzeugs beweglichen Werkzeugkopf (4), der über eine linear beweglich gelagerte Betätigungsstange (3) mit einer Antriebseinheit (10) gekoppelt oder zumindest zeitweise koppelbar ist, wobei die Antriebseinheit (10) zumindest einen Antriebsmotor (1) sowie ein Getriebe (2) aufweist, das einen rotatorischen Antrieb des Antriebsmotors (1) in eine Linearbewegung zum Antrieb der Betätigungsstange (3) wandelt, und wobei die Antriebseinheit (10) eine mechanische Drehmomentbegrenzungsvorrichtung (5) aufweist, die dazu ausgebildet ist, einen Kraft-/Drehmomentfluss vom Antriebsmotor (1) zu der Betätigungsstange (3) bei einem vorbestimmten Grenzdrehmoment zu unterbrechen,
- wobei der Antriebsmotor (1) zur Bewirkung einer Bewegung des Werkzeugkopfs (4) in einer Wirkrichtung (W) betrieben wird, und
- der Werkzeugkopf (4) dadurch in eine Wirk-Endstellung überführt wird, und
- bei Überschreiten des vorbestimmten Grenzdrehmoments in der Antriebseinheit (10) die Drehmomentbegrenzungsvorrichtung (5) ausgelöst wird, um den Kraft-/Drehmomentfluss vom Antriebsmotor (1) zu der Betätigungsstange (3) zu unterbrechen.

15. Verfahren nach Anspruch 14, wobei eine elektronische Überlastsicherung des Antriebsmotors (1) ausgelöst wird.
